Europäisches Patentamt

European Patent Office

Office européen des brevets

(19)

(11) **EP 0 373 854 B1**

(12) **EUROPEAN PATENT SPECIFICATION**

(45) Date of publication and mention
of the grant of the patent:
**08.10.1997 Bulletin 1997/41**

(51) Int Cl.$^6$: **G06T 11/00**

(21) Application number: 89312900.7

(22) Date of filing: **11.12.1989**

(54) **Apparatus and method for detecting internal structures contained within the interior region of a solid object**

Vorrichtung und Verfahren zur Ermittlung von inneren Strukturen innerhalb eines festen Objekts

Système et méthode pour la détection de structures internes contenues à l'intérieur d'un objet solide

(84) Designated Contracting States:
**DE FR GB NL**

(30) Priority: **12.12.1988 US 282666**

(43) Date of publication of application:
**20.06.1990 Bulletin 1990/25**

(73) Proprietor: **GENERAL ELECTRIC COMPANY
Schenectady, NY 12345 (US)**

(72) Inventors:
- **Cline, Harvey Ellis
Schenectady New York 12309 (US)**
- **Lorensen, William Edward
Ballston Lake New York 12019 (US)**

(74) Representative: **Goode, Ian Roy et al
London Patent Operation
General Electric International, Inc.,
Essex House,
12-13 Essex Street
London WC2R 3AA (GB)**

(56) References cited:
**EP-A- 0 216 156          US-A- 4 641 351**

- **IBM TECHNICAL DISCLOSURE BULLETIN. vol. 18, no. 4, September 1975, NEW YORK US SCHREIBER: 'COMPUTING A SET OF TRIANGULAR PLATES WHICH REPRESENT A POTENTIAL SURFACE OF A SCALAR FUNCTION DEFINED AT THE VERTICES OF THREE-DIMENSIONAL CARTESIAN MESH'**

## Description

This invention relates to displaying interior surfaces within solid bodies, and, more particularly, to a method and system for detecting and displaying a single interior surface intermingled with other surfaces having similar physical properties.

It is well known to obtain three-dimensional arrays of data representing one or more physical properties at regular grid positions within the interior of solid bodies. Such data can be obtained by non-intrusive methods such as computed axial tomographic (CAT) x-ray scanning systems, by nuclear magnetic resonance (NMR) imaging systems, or by other non-intrusive mechanisms such as ultrasound, positron emission tomography (PET), emission computed tomography (ECT) and multimodality imaging (MMI). Each of these techniques produces a planar, grid-like array of values for each of a succession of slices of the solid object, thus providing a three-dimensional array of such values. Typically, the solid object is a human body or a portion thereof, although the method is equally applicable to other natural or artificial bodies. In the case of CAT scanning, the physical value would be the coefficient of x-ray absorption. For NMR imaging, the physical value would be the spin-spin or the spin-lattice relaxation time. In any event, the measured physical values reflect the variations in composition, density or surface characteristics of the underlying physical structures. Such a three-dimensional data array typically consists of a plurality of sets of three-dimensional (x, y, z) coordinates distributed at regular positions in a cubic or parallelepiped lattice within the body, and at least one value ($V_{xyz}$) of the physical property being associated with each respective one of the coordinate positions. Each cubically adjacent set of eight such positions defines a cubic volume called a "voxel" with a physical property value being specified for each of the eight voxel vertices. In turn, each voxel "neighborhood" includes the voxel itself and the immediately adjacent six voxels which share a common face; thus, a voxel neighborhood is a cubic volume including seven voxels having 32 physical values associated with the voxel vertices.

It is likewise known to utilize such three-dimensional arrays of interior physical values to generate visual images of the interior structures within the body. In the case of the human body, the visual images thus produced can be used for medical purposes such as diagnostics or for the planning of surgical procedures. In order to display two-dimensional images of such three-dimensional interior structures, however, it is necessary to locate the position of the surface of such structure within the array of physical values. This is accomplished by comparing the array values to a single threshold value, or to a range of threshold values, corresponding to the physical property values associated with that surface. Bones or any other tissue, for example, can be characterized by a known range of density values to which the array values can be compared. Once the surface location is determined, this surface must be shaded so as to give the human eye the correct impression of the shape and disposition of that surface when it is displayed on a two-dimensional display device. To provide such shading, the angular direction of a vector normal to the surface at each point on the surface is compared to the viewing angle of the observer. The intensity of shading can then be adjusted so as to be proportional to the difference between these angles. Such angular difference information can also be used to control the colors incorporated in the displayed images, thus providing yet another visual clue to the surface disposition. Normal vectors with components directed away from the viewing angle can be ignored since the associated surfaces are hidden from view.

One method for approximating the surface of an internal structure is the so-called "marching cubes" method, disclosed in EP-A- 0 204 225, and assigned to applicants' assignee. In this method, the surface segment intersecting a voxel is approximated by one of a limited number of standardized plane polygonal surfaces intersecting the voxel. One particular standardized surface is selected by a vector representing the binary differences between the threshold value and the eight voxel vertex values. The surface-to-voxel intersection coordinates, as well as the normal vector, for each such standardized polygonal surface set can then be calculated or obtained by table look-up techniques. The final surface is assembled as a mosaic, using all of the standardized polygons as tessera or tiles. Appropriate intensity values derived from the normal vector angles can be displayed immediately for viewing, or stored for later display. EP-A- 0 204 225, and also assigned to applicants' assignee, shows a variation of the marching cubes method using nonlinear interpolation to locate more accurately the coordinates of the tessellated standardized polygons.

Another method for approximating the surface of an internal structure is the so-called "dividing cubes" method, disclosed in EP-A- 0 216 156, and also assigned to applicants' assignee. In this method, the values at the vertices of the voxel are used to interpolate, in three dimensions, values at regularly positioned intra-voxel sub-grid locations. These interpolated sub-grid values can then be used to locate the surface position more precisely and to calculate the normal vector more accurately. The marching cubes and dividing cubes algorithms are further described in "Two Algorithms for the Three-Dimensional Reconstruction of Tomograms," by H.E. Cline et al., Medical Physics, Vol. 15, No. 3, p. 320, May/June 1988.

In order to distinguish between different internal structures with the same or similar physical property values, W. E. Lorensen et al. patent US-A- 4 751 643, granted June 14, 1988, and likewise assigned to applicants' assignee, discloses a technique for labeling surfaces with similar property values and using adjacency criteria with respect to a "seed" location in the particular structure of interest to segregate the desired surface from all of the labeled surfaces.

EP-A- 0 261 447 discloses another technique of segregating similar structures by determining connectivity from adjacency information. More particularly, adjacency is determined independently for each slice in the data store array, and thereafter adjacency is determined between slices. H.E. Cline et al. patent US-A-4 879 668, also assigned to applicants' assignee, discloses yet another technique for differentiating internal structures in which a linear pass is made through the data array to locate and label all of the different structures along the scan line by counting structure interfaces. It is apparent that there are formidable obstacles to establishing the connectivity of surface data points in a three-dimensional array of data while discriminating against similar but unconnected surfaces.

While use of a single array of values of a physical property within the interior of a solid body to generate perspective images of arbitrarily selected internal structures within the body, seen as if viewed from arbitrarily chosen viewing angles, all by manipulating the selfsame single array of values, is known, some structures in the interior of the human body unfortunately have not responded well to this imaging technique. Closely adjacent and intermingled tissues with the same or closely similar values of the scanned physical property, for example, have been difficult or impossible to discriminate between. Attempts to image such tissues result in an image including multiple tissues with inadequate or concealed details. Blood vessels are one type of tissue which is particularly difficult to discriminate for these reasons. A similar kind of problem, and one solution to the problem, is discussed in "3D Reconstruction of the Brain from Magnetic Resonance Images Using a Connectivity Algorithm," by H.E. Cline et al., Magnetic Resonance Imaging, Vol. 5, No. 5, p. 345, 1987.

Nuclear magnetic resonance (NMR) imaging is better at contrasting soft tissues than CAT x-ray scans, but suffers from the fact that there are many more soft tissue surfaces that are identified by any given threshold surface value, as compared to surfaces such as bone and organs. The difficulty with the connectivity algorithms of the prior art in situations where surface values are close to each other is that they examine all adjacent voxels in order to find voxels intersecting the surface of interest. This procedure inherently tends to bridge to tissues with similar surface values even though the surfaces are not in fact connected. An additional problem with the prior art technique is the greatly increased amount of processing necessary to examine all of the adjacent voxels, increasing the delay in generating an image while at the same time producing images with inferior surface discrimination. The problem becomes particularly acute for three-dimensional vascular imaging where the large number of closely spaced blood vessels accentuate the surface discrimination problem.

The connectivity algorithm described in the above-mentioned Magnetic Resonance Imaging article can be called a volume-dependent algorithm in that all of the voxels immediately adjacent to the faces of a seed voxel (i.e., all of the volume surrounding the seed voxel) are examined for surface intersections. Since other surfaces with the same or similar surface constants could also intersect such adjacent voxels, there exists the possibility of bridging to adjacent but actually unconnected surfaces. The problem of preventing bridging by better discriminating between closely intermingled surfaces with similar surface constants in three-dimensional imaging systems is of considerable concern in soft tissue imaging.

There is disclosed in IBM Technical Disclosure Bulletin Vol.18 No.4 Sept. 1975 a method of computing the vertices and planar polyhedra, triangles, of solid surfaces defined in terms of a scalar function whose value is specified at the mesh points of a three-dimensional Cartesian mesh, and of organizing these vertices and triangles in such a manner as to be suitable for eliminating the hidden lines and surfaces from the rendering of the bodies which the potential surfaces bound. The steps of the method involve computing the vertices of the potential surface and the triangle faces which make up the surface; eliminating redundantly computed vertices to condense the vertex list, and computing the distinct objects which make up the total surface; computing the rendering of the potential surface; and eliminating the hidden lines and plotting the rendering on a computer controlled plotting device, or displaying it on a computer controlled interactive graphical device.

The present invention is defined in claims 1 and 5.

The precision with which the illustrative method of the present invention can follow a single surface allows its use in situations where the non-invasive data does not itself provide a large amount of discrimination between different surfaces. Classical instances in which such a low level of discrimination resides are the NMR data for soft brain tissues and for vascular morphology studies. Generating images from any data arrays, however, will also benefit from the higher level of selectivity obtainable by employing the illustrative method of the present invention.

A better understanding of the present invention may be gained by considering the following illustrative description in conjunction with the accompanying drawings, in which:

Figure 1 is a perspective view illustrating a single voxel element defined by eight grid locations in an array of physical values obtained by non-intrusive means, useful in explaining the operation of embodiments of the present invention;

Figure 2 is a perspective view of a voxel neighborhood, illustrating the adjacent voxels which might share a common intersected face with the central voxel, also useful in explaining the operation of embodiments of the present invention;

Figure 3 is a schematic graphical illustration of the various possible ways in which a surface can intersect a single cubical voxel, useful in explaining an illustrative connectivity algorithm in accordance with one aspect of the present invention;

Figure 4 is a general block diagram of an illustrative processing system in accordance with another aspect of the present invention for carrying out the surface connectivity algorithm;

Figure 5 is a general block diagram of one processing system which might be used for generating images of the three-dimensional surface from the voxels selected by the system of Figure 4; and

Figure 6 is a flowchart of the process taking place in the surface connectivity discrimination system.

To facilitate reader understanding, identical reference numerals are used to designate elements common to the figures.

In the illustrative method and system of the present invention described hereinafter, a sequence of voxel elements is used to locate the intersection of a surface of interest with the voxels. A "voxel" in this connection is a three-dimensional parallelepiped defined by an array of data values representing physical values measured in the interior of a solid body by non-intrusive means. Data from consecutive NMR or CAT scan slices are assembled into a three-dimensional array of values which can then be analyzed or processed to obtain two-dimensional images of the three-dimensional information. The generation of three-dimensional interior data arrays is well known in the art and will not be further described here. It is sufficient to note that such data arrays are readily obtainable by well-known, non-intrusive methods such as computed axial tomographic (CAT) x-ray scanning systems, nuclear magnetic resonance (NMR) imaging systems, ultrasound scanning, positron emission tomography (PET) emission computed tomography (ECT) and multimodality imaging (MMI). Such methods produce planar arrays of data points, one planar array at each of a regular succession of adjacent "slices" through the solid body being scanned. Taken together, this succession of slices forms the three-dimensional array of data values. The illustrative system described herein can be used to improve the quality of the surface images generated from data acquired in any of the above non-invasive data-gathering techniques. The system is particularly useful, however with NMR data due to the inherently smaller dynamic range in pixel intensities provided by NMR and the more complex morphology of the soft tissues contrasted by NMR techniques.

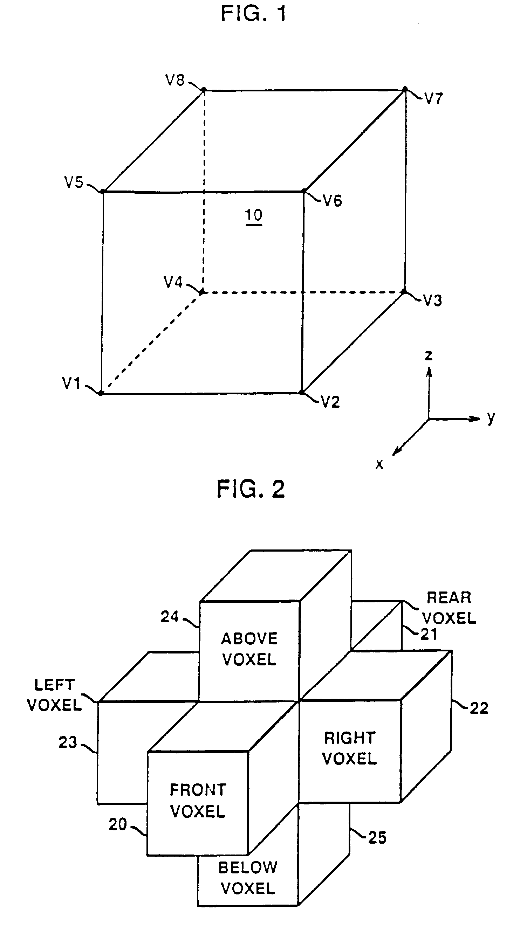

The array nature of the data values acquired by such non-invasive techniques can be seen in Figure 1, which illustrates a single voxel element 10 with vertices V1 through V8. Each voxel element, such as element 10, spans two successive slices of data values. Associated with each vertex V1-V8 of voxel element 10 is a data value which represents the measurement of at least one physical property associated with the corresponding spatial position within the three-dimensional body. The spatial positions are located in regular patterns defining regularly spaced grid locations within the body. The grid positions, in turn, define a plurality of adjacent voxels like voxel 10 in Figure 1.

There is described herein, by way of example, a new and superior connectivity algorithm which is used to follow a preselected internal surface through the voxels making up the data array. In particular, the immediately adjacent voxels, i.e., those voxels sharing a common face with the voxel of interest, are tested to determine whether or not each of the common faces is actually penetrated by the surface of interest. Only those voxels sharing a common face actually penetrated by the surface of interest are considered as candidates for surface voxels. The remaining adjacent voxels, also sharing a common face with the voxel of interest, but not actually penetrated by the surface of interest, are not considered as candidates for surface voxels. It is this elimination of adjacent voxels which are not intersected by the surface of interest that accounts for the superior discrimination of the algorithm.

As noted above, Figure 1 discloses a single voxel. In Figure 2, a perspective view of all of the immediately adjacent voxels sharing a common face with the voxel of interest is shown. These adjacent voxels with common faces are called the "neighborhood" voxels of the voxel of interest. The voxel of interest cannot be seen in Figure 2 because it is concealed by the immediately adjacent neighborhood voxels. The neighborhood voxels include a front voxel 20 in front of the voxel of interest, a rear voxel 21 behind the voxel of interest, a right voxel 22 and a left voxel 23, on the right and left, respectively, of the voxel of interest, and an above voxel 24 and a below voxel 25 respectively located, above and below the voxel of interest. Thus there are six neighborhood voxels which are immediately adjacent to, and share common faces with, the voxel of interest. In following a surface of interest, the present algorithm proceeds from the voxel of interest to one or more of the neighborhood voxels of Figure 2 which share a common penetrated face. Prior algorithms either tested all voxels in the data space for intersection with the surface of interest, or tested all voxels in the neighborhood of a seed voxel for intersection with the surface of interest. Since the test for intersection comprises a comparison with a constant value indicative of the surface, the prior algorithms failed to discriminate against surface intersections with other surfaces having the same or a similar surface constant. This lack of discrimination causes bridging to the other surfaces, thereby increasing the number of voxels to be processed while, at the same time, reducing the value of the resulting image.

It can readily be seen that, if the address of the voxel of interest is given by (x,y,z) coordinates, then the addresses of the neighborhood voxels are given by:

$$\text{front voxel 20 address: } x + 1, y, z \tag{1}$$

$$\text{rear voxel 21 address: } x - 1, y, z$$

$$\text{right voxel 22 address: } x, y + 1, z$$

$$\text{left voxel 23 address: } x, y - 1, z$$

$$\text{above voxel 24 address: } x, y, z + 1$$

$$\text{below voxel 25 address: } x, y, z - 1$$

These relative addresses provide a mechanism to readily access the neighborhood voxel vertex values. These neighborhood voxel values, in turn, are used for both the calculation of the normal values, to be described hereinafter, and for following a surface of interest through to the adjacent voxels.

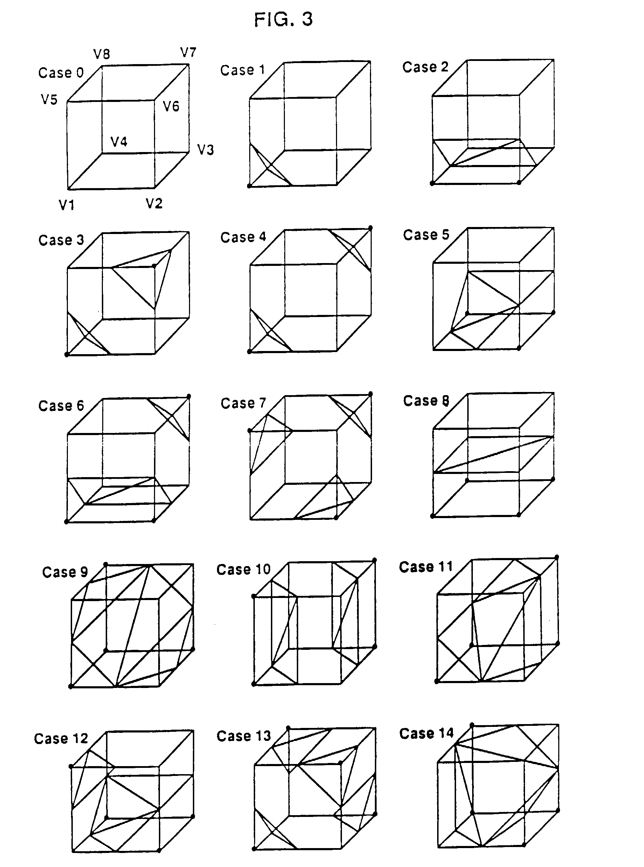

In order to understand the present connectivity algorithm, it is first necessary to analyze the ways in which a surface of interest can intersect a voxel. Although there are an infinite number of ways in which such a surface can intersect a voxel, these intersections can be classified by noting which of the eight voxel vertices are inside of the surface of interest, and which of the eight voxel vertices are outside of the surface of interest. Representing the inside vertices as "1s" and the outside vertices as "0s", each voxel has associated with it a binary voxel index made up of the "1s" and "0s" corresponding to the "insidedness" and "outsidedness" of the voxel vertices V1 through V8 (Figure 1). It is clear that there are 256 different values for the voxel index, and hence 256 classes of different ways in which a surface can intersect a voxel. These 256 different ways of intersecting a voxel can be classified into only 15 topologically distinct patterns from which all of the others can be obtained by rotation and complementing. These 15 distinct patterns are illustrated in Figure 3.

Figure 3 shows perspective views of 15 cubic voxels, 14 of which are exemplary of all of the topologically distinct ways in which a surface can intersect a voxel. The voxel vertices inside the intersecting surface of interest are represented by a closed circle. Case 0, of course, represents the case where there is no intersection. For convenience, the intersecting surfaces in the remainder of the cases of Figure 3 are approximated by tessellations of triangular areas having their vertices located at the midpoints of the voxel edges. Since the present algorithm is concerned only with identification of the faces of the voxel penetrated by the surface of interest, this approximation is entirely adequate.

Using the topologically distinct cases illustrated in Figure 3, a voxel face adjacency table can be constructed, showing which of the voxel faces are actually penetrated by the intersecting surface for each of the cases. The following Table I is such an adjacency table. In Table I, a "1" stands for a face which is penetrated by the surface of interest, while a "0" stands for a face not penetrated by the surface of interest. The faces are identified by the front, rear, right, left, above and below designations of the adjacent voxels in Figure 2.

The adjacency information of Figure 3 can be summarized as follows:

Table I

| Case No. | Index | Front | Rear | Right | Left | Above | Below |
|---|---|---|---|---|---|---|---|
| 0 | 00000000 | 0 | 0 | 0 | 0 | 0 | 0 |
| 1 | 10000000 | 1 | 0 | 0 | 1 | 0 | 1 |
| 2 | 11000000 | 1 | 0 | 1 | 1 | 0 | 1 |
| 3 | 10000100 | 1 | 0 | 1 | 1 | 1 | 1 |
| 4 | 10000010 | 1 | 1 | 1 | 1 | 1 | 1 |
| 5 | 01110000 | 1 | 1 | 1 | 1 | 0 | 1 |
| 6 | 11000010 | 1 | 1 | 1 | 1 | 1 | 1 |

Table I   (continued)

| Case No. | Index | Front | Rear | Right | Left | Above | Below |
|---|---|---|---|---|---|---|---|
| 7 | 01001010 | 1 | 1 | 1 | 1 | 1 | 1 |
| 8 | 11110000 | 1 | 1 | 1 | 1 | 0 | 0 |
| 9 | 10110001 | 1 | 1 | 1 | 1 | 1 | 1 |
| 10 | 10101010 | 1 | 1 | 1 | 1 | 1 | 1 |
| 11 | 10110010 | 1 | 1 | 1 | 1 | 1 | 1 |
| 12 | 01111000 | 1 | 1 | 1 | 1 | 1 | 1 |
| 13 | 10100101 | 1 | 1 | 1 | 1 | 1 | 1 |
| 14 | 01110001 | 1 | 1 | 1 | 1 | 1 | 1 |

The face adjacencies for all of the other voxel indices can be derived from these 15 by the standard rotation and complement operations inherent in the cubic symmetry.

It can be seen that Table I can be expanded into a table taking into account all of the possible 256 different voxel indices. Moreover, only the "1" entries in such a table indicate a adjacent voxel with a penetrated common face. In recursively following a surface from a seed voxel, the adjacent voxels represented by a "0" in Table I (and its expansion) need not be considered. The resulting decimation of the adjacent voxels to be considered not only reduces the amount of processing which must be done but also increases the surface discrimination in the resulting image.

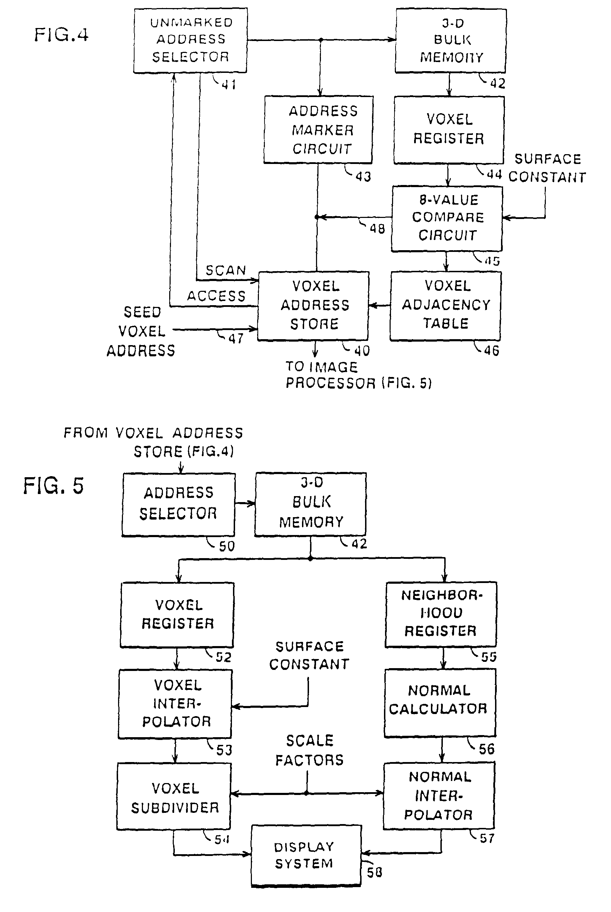

An illustrative system in accordance with the present invention is shown in block diagram form in Figure 4. The system comprised a voxel decimator for selecting only those voxels from the data array which actually intersect a surface of interest. It is assumed that the address of a seed voxel, known to be on the surface of interest, is supplied to the decimator of Figure 4 by way of a lead 47. Such seed voxel can be identified, for example, by using the cross-sectional image generator described in EP-A- 0 365 141. Such cross section generator, set to a high contrast and oriented perpendicular to the surface of interest, provides a readily usable technique for locating a voxel in the surface of interest. A blood vessel, for example, appears as a circle on such cross section, and is readily identified and located. The seed voxel address thus obtained is supplied by way of lead 47 to a voxel address store circuit 40. Voxel store circuit 40 is capable of storing a large plurality of addresses of voxels such as the voxel of Figure 1, but fewer than the total number of voxels in the data array. Each of these voxel addresses is capable of accessing the eight voxel vertex values of the addressed voxel from a bulk memory 42. Voxel address store 40 is also capable of storing, for each voxel address, a mark which is associated with the voxel address but is not used as part of the address in accessing bulk memory 42.

An unmarked address selector 41 scans through the addresses in voxel address store 40 and locates and accesses the first address lacking an associated mark. This unmarked address is supplied by selector 41 to bulk memory 42 to access the eight voxel vertex values and store these vertex values in a voxel register 44. At the same time, an address marker circuit 43 is energized to mark that address in voxel address store 40. It is therefore apparent that each address in store 40 is accessed by selector 41 once, and only once, after which it is marked by circuit 43 and can no longer be accessed by selector 41.

The eight voxel vertex data values in voxel register 44 are compared to the constant surface value in an 8-value compare circuit 45. Compare circuit 45 determines if the surface value is greater than or less than each of the vertex values, and combines the binary results of these comparisons into an eight-bit binary index which is called the voxel index. This voxel index is used as a pointer to access the addresses (or address increments) of those voxels that share a common penetrated face with the voxel whose vertex values are stored in register 44. A voxel adjacency table 46 is, of course, an expanded version of Table I where the "1" entries can be used to increment or decrement the voxel address from selector 41 as shown in address definitions (1). The new addresses thus formed are added to the addresses in voxel address store 40. These new addresses can thereafter be selected, one at a time, by selector 41, to be used to access memory 42 for yet other voxels on the surface of interest.

If 8-value compare circuit 45 determines that the current voxel does not intersect the surface of interest, the address of that current voxel is removed from voxel address store 40 by way of a lead 48. That is, if the voxel index is all 0s (00000000) or all 1s (11111111), the surface is entirely inside of, or entirely outside of, the voxel and no intersection occurs. This is a further check on the connectivity implied by voxel adjacency table 46, and further improves the discrimination afforded by the the present algorithm.

The circuit of Figure 4 operates to accumulate in store 40 the addresses of all of the voxels in the data array which satisfy the adjacency criteria stored in abbreviated form in table 46, and which actually intersect the surface of interest, given at least one seed voxel address in store 40. The surface-following algorithm implemented by Figure 4 terminates when selector 41 can no longer find an unmarked address in store 40. At that time, store 40 contains the addresses of all of the voxels in the data array which include intersections with a single surface represented by the seed voxel and by the surface constant applied to compare circuit 45. These voxel addresses can then be used, by any known prior art technique, to actually create the image for display. It should be noted, however, that the subsequent processing for image generation can be initiated just as soon as there is one address in store 40 and can proceed just as fast as new addresses are added to store 40. In the alternative, a complete set of addresses for a surface can be accumulated in store 40 and used at some later time to generate an image of the surface of interest.

Figure 5 is a block diagram of one such processor for generating an image of the surface of interest. The processor uses highly parallel circuits and a highly parallel architecture to rapidly generate images from the data identified in store 40. For purposes of illustration, the circuit of Figure 5 uses the "dividing cubes" algorithm of the aforementioned EP-A-0 216 156, to obtain images in real time to support ongoing surgical or other procedures. Alternatively, other algorithms, such as the "marching cubes" algorithm of the aforementioned EP-A- 0 204 225, and other processors, can be used to process the data and to form the desired image of the surface.

In the system of Figure 5, an address selector 50 selects the addresses from voxel address store 40 (Figure 4), one at a time, and uses these addresses to access the voxel vertex values for storage in a voxel register 52 and to access the neighborhood voxel vertex values for storage in a neighborhood register 55. Using the "dividing cubes" algorithm, a voxel subdivider 54 generates sub-voxel addresses used by a voxel interpolator 53 to generate sub-voxel vertex values. These sub-voxel vertex values are also compared to the surface constant by the voxel interpolator to identify the sub-voxels intersected by the surface of interest.

Simultaneously, the neighborhood voxel vertex values in neighborhood register 55 are used in a normal calculator 56 to calculate the value of the normals to the surface intersecting the voxel. The gradient of the density function represented by the data array is used as the intensity of the image pixels in order to provide shading for the generated image. Such shading is proportional to the difference between the density gradient angle and the viewing angle. If the data array is a rectangular lattice with a unit cell of dimensions a, b and c, then the gradient vector $g = (g_x, g_y, g_z)$ can be established from the density function by taking central differences between the densities, $f(x_o, y_o, z_o)$, evaluated at the lattice point $(x_o, y_o, z_o)$:

$$g_x = \frac{f(x_o + a, y_o, z_o) - f(x_o - a, y_o, z_o)}{2a} \tag{2}$$

$$g_y = \frac{f(x_o, y_o + b, z_o) - f(x_o, y_o - b, z_o)}{2b}$$

$$g_z = \frac{f(x_o, y_o, z_o + c) - f(x_o, y_o, z_o - c)}{2c}$$

The normal calculator 56 implements equations (2) to derive unit normal vectors for each voxel vertex. The normal vector values for the sub-voxels identified by voxel subdivider 54 are interpolated from the voxel vertex unit normal values in a normal interpolator 57. The surface location values from voxel subdivider 54 and the normal (intensity) values from normal interpolator 57 are supplied to a display system 58. Display system 58 rotates the pixel points into the display plane, imposes the intensity value of the closest surface pixel at the display point, and displays the resulting image. Controls on the viewing angle and viewing depth are used to vary the view of the surface, all in accordance with well-known imaging techniques.

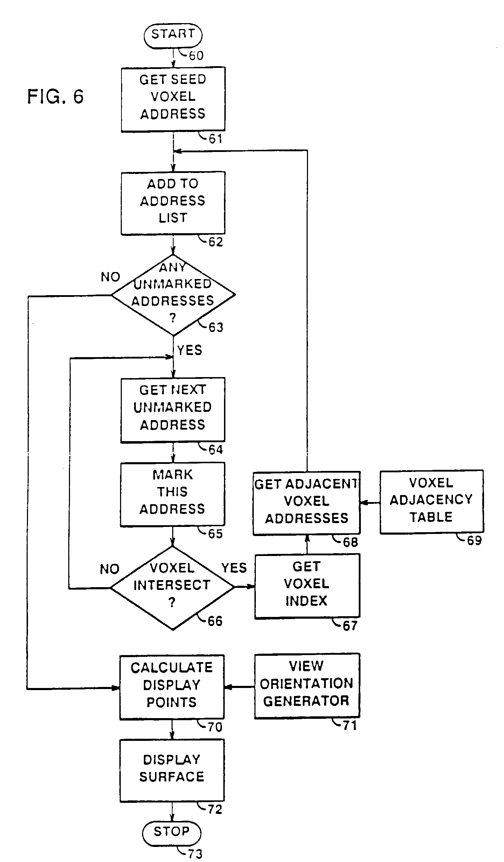

The process carried out in the processing systems of Figures 4 and 5 of the drawings can be represented by the flow chart of Figure 6. Starting at start box 60, the seed voxel address or addresses are obtained at box 61 and added to the address list at box 62. At decision box 63, it is determined if there are any unmarked addresses. If there is at least one unmarked address, box 64 is entered to get the next unmarked address. At box 65, this address is marked and, at decision box 66, the corresponding voxel vertex values are tested for surface intersection with this voxel. If there is no intersection with this voxel, the voxel address is eliminated from the voxel address store and the next unmarked address is obtained by re-entering box 64. If the voxel is intersected, the voxel index obtained from the comparison is obtained at box 67 and used at box 68 to obtain the address of adjacent surface voxels from the voxel adjacency table 69. These additional voxel addresses are added to the voxel address store at box 62 and the process continues.

If decision box 63 determines that there are no more unmarked addresses in the voxel address store, box 70 is entered to calculate the display points, using the output of a view orientation generator 71. The calculated display points are displayed at box 72 and the process terminated at box 73.

**Claims**

1. A system for displaying a two-dimensional image of an internal surface in a three-dimensional solid body, said system comprising:

> means for storing three-dimensional signal patterns representing the value of at least one physical property associated with a three-dimensional body at regularly spaced grid locations defining voxel elements within said body;
> means for selectively accessing eight values of said physical property defining one of said voxel elements from said storing means;
> means for storing common face penetration information concerning possible intersections of voxels with a surface of interest;
> means for recursively identifying voxels intersecting said surface of interest including
> means for generating a voxel index of surface penetration of one identified voxel, said voxel index comprising a binary string representing whether each voxel vertex is within or outside of said surface of interest; and
> means for utilizing said voxel indices to access said common face penetration information to identify voxels adjacent to said one identified voxel and having a common face penetrated by said surface of interest;
> means for utilizing the identified voxels to display said two-dimensional image of said internal surface.

2. The system according to claim 1 wherein said voxel index generating means comprises means for simultaneously comparing all vertex values of said voxel to a value of said physical property indicative of said surface of interest.

3. The system according to claim 1 or 2 wherein said recursively identifying means comprises storage means for storing common face penetration information for all possible classes of surface intersections with one of said voxels.

4. The system according to claim 1 or 2 wherein said recursively identifying means comprises:

> means for storing identifications of all voxels intersecting said surface of interest; and
> means for utilizing said stored identifications to construct a two-dimensional image of said surface of interest.

5. A method for displaying a two-dimensional image of an internal surface within a three-dimensional solid body, said method comprising the steps of:

> storing three-dimensional signal patterns representing the value of at least one physical property associated with a three-dimensional body at regularly spaced grid locations defining voxel elements within said body, each voxel having eight vertex values;
> selectively accessing the eight voxel vertex values of said physical property for a stored one of said voxel elements;
> storing common face penetration information concerning possible intersections of voxels with a surface of interest;
> generating an index of surface penetration for each voxel, said index comprising a binary string representing which voxel vertex values are inside of said internal surface and which voxel vertex values are outside of said internal surface;
> accessing common face penetration information associated with the corresponding voxel in accordance with the generated indices so as to avoid bridging between said surface of interest and other unconnected but closely intermingled surfaces having similar physical properties;
> recursively identifying only those voxels having common faces penetrated by said internal surface; and
> displaying a two-dimensional image of said internal surface by utilizing only the identified voxels.

6. The method according to claim 5 wherein said step of generating an index includes the step of simultaneously comparing all of said voxel vertex values to a single value representing said internal surface.

7. The method according to claim 5 wherein the recursively identifying step includes the stop of storing common face penetration information for all possible classes of surface intersections with said voxels.

8. The method according to claim 5 further comprising the steps of:
storing identifications of all voxels intersecting said surface of interest in accordance with the stored identifications.

**Patentansprüche**

1. System zum Darstellen eines zweidimensionalen Bildes von einer inneren Oberfläche in einem dreidimensionalen festen Körper, wobei das System enthält:

eine Einrichtung zum Speichern dreidimensionaler Signalmuster, die den Wert von wenigstens einer physikalischen Eigenschaft darstellen, die einem dreidimensionalen Körper zugeordnet ist, an in regelmäßigen Abständen angeordneten Gitterplätzen, die Voxelelemente in dem Körper definieren, eine Einrichtung für einen selektiven Zugriff auf acht Werte der physikalischen Eigenschaft, die eines der Voxelelemente definieren, aus der Speichereinrichtung, eine Einrichtung zum Speichern gemeinsamer Flächendurchdringungsinformation bezüglich möglicher Schnitte von Voxeln mit einer interessierenden Oberfläche, eine Einrichtung zum rekursiven Identifizieren von Voxeln, die die interessierende Oberfläche schneiden, enthaltend eine Einrichtung zum Generieren eines Voxel-Index der Oberflächendurchdringung von einem identifizierten Voxel, wobei der Voxel-Index einen binären String aufweist, der darstellt, ob jeder Voxel-Scheitel innerhalb oder außerhalb der interessierenden Oberfläche ist, und eine Einrichtung zum Verwenden der Voxel-Indices, um Zugriff auf die gemeinsame Flächendurchdringungsinformation zu nehmen, um Voxel zu identifizieren, die benachbart zu dem einen identifizierten Voxel sind und eine gemeinsame Fläche aufweisen, die von der interessierenden Oberfläche durchdrungen ist, eine Einrichtung zum Verwenden der identifizierten Voxel, um das zweidimensionale Bild der inneren Oberfläche darzustellen.

2. System nach Anspruch 1, wobei die Voxel-Index-Generierungseinrichtung eine Einrichtung aufweist zum gleichzeitigen Vergleichen aller Scheitelwerte des Voxels mit einem Wert der physikalischen Eigenschaft, der die interessierende Oberfläche angibt.

3. System nach Anspruch 1 oder 2, wobei die Einrichtung zum rekursiven Identifizieren eine Speichereinrichtung aufweist zum Speichern gemeinsamer Flächendurchdringungsinformation für alle möglichen Klassen von Oberflächenschnitten mit einem der Voxel.

4. System nach Anspruch 1 oder 2, wobei die Einrichtung zum rekursiven Identifizieren aufweist: eine Einrichtung zum Speichern von Identifikationen von allen Voxeln, die die interessierende Oberfläche schneiden, und eine Einrichtung zum Verwenden der gespeicherten Identifikationen, um ein zweidimensionales Bild der interessierenden Oberfläche zu konstruieren.

5. Verfahren zum Darstellen eines zweidimensionalen Bildes von einer inneren Oberfläche in einem dreidimensionalen festen Körper, wobei das Verfahren die Schritte enthält:

Speichern von dreidimensionalen Signalmustern, die den Wert von wenigstens einer physikalischen Eigenschaft darstellen, die einem dreidimensionalen Körper zugeordnet ist, an in regelmäßigen Abständen angeordneten Gitterplätzen, die Voxel-Elemente in dem Körper definieren, wobei jedes Voxel acht Scheitelwerte aufweist, selektives Zugreifen auf die acht Voxel-Scheitelwerte der physikalischen Eigenschaften für ein gespeichertes Element der Voxel-Elemente, Speichern gemeinsamer Flächendurchdringungsinformation bezüglich möglicher Schnitte von Voxeln mit einer interessierenden Oberfläche, Generieren eines Index von Flächendurchdringung für jedes Voxel, wobei der Index einen binären String aufweist, der darstellt, welche Voxel-Scheitelwerte innerhalb der inneren Oberfläche sind und welche Voxel-Scheitelwerte außerhalb der inneren Oberfläche sind, Zugreifen auf gemeinsame Flächendurchdringungsinformation, die dem entsprechenden Voxel gemäß den generierten Indices zugeordnet ist, um eine Brückenbildung zwischen der interessierenden Oberfläche und anderen, unverbundenen, aber eng durchsetzten Oberflächen mit ähnlichen physikalischen Eigenschaften zu verhindern,

rekursives Identifizieren nur derjenigen Voxel mit gemeinsamen Flächen, die von der inneren Oberfläche durchdrungen sind, und Darstellen eines zweidimensionalen Bildes der inneren Oberfläche, indem nur die identifizierten Voxel verwendet werden.

6.  Verfahren nach Anspruch 5, wobei der Schritt des Generierens von einem Index den Schritt enthält, daß gleichzeitig alle Voxel-Scheitelwerte mit einem einzelnen Wert verglichen werden, der die innere Oberfläche darstellt.

7.  Verfahren nach Anspruch 5, wobei der Schritt des rekursiven Identifizierens den Schritt enthält, daß gemeinsame Flächendurchdringungsinformation für alle möglichen Klassen von Oberflächenschnitten mit den Voxeln gespeichert wird.

8.  Verfahren nach Anspruch 5, ferner die Schritte enthaltend: Speichern von Identifikationen von allen Voxeln, die die interessierende Oberfläche gemäß den gespeicherten Identifikationen schneiden.

## Revendications

1.  Système d'affichage de l'image bi-dimensionnelle d'une surface interne dans un corps solide tri-dimensionnel, ledit système comprenant :

    -   un moyen de mémorisation de motifs de signaux tri-dimensionnels représentant la valeur d'au moins une propriété physique associée à un corps tri-dimensionnel en des emplacements de grille régulièrement espacés qui définissent des éléments voxels dans ledit corps,
    -   un moyen d'accès sélectif à huit valeurs de ladite propriété physique qui définissent l'un desdits éléments voxels dudit moyen de mémorisation,
    -   un moyen de mémorisation d'une information de pénétration de face commune concernant des intersections possibles de voxels avec une surface à laquelle on s'intéresse,
    -   un moyen d'identification récursive des intersections de voxels avec ladite surface à laquelle on s'intéresse, qui comprend :

        .   un moyen de production d'un indice de voxel de pénétration de surface d'un premier voxel identifié, ledit indice de voxel comprenant une suite binaire qui représente le fait que chaque sommet du voxel est à l'intérieur ou à l'extérieur de ladite surface à laquelle on s'intéresse, et
        .   un moyen d'utilisation desdits indices de voxel pour accéder à ladite information de pénétration de face commune pour identifier des voxels adjacents audit premier voxel identifié et ayant une face commune que pénètre ladite surface à laquelle on s'intéresse,

    -   un moyen d'utilisation des voxels identifiés pour afficher ladite image bi-dimensionnelle de ladite surface interne.

2.  Système selon la revendication 1, dans lequel ledit moyen de production d'un indice de voxel comprend un moyen pour comparer simultanément toutes les valeurs de sommet dudit voxel à une valeur de ladite propriété physique représentative de ladite surface à laquelle on s'intéresse.

3.  Système selon la revendication 1 ou 2, dans lequel ledit moyen d'identification récursive comprend un moyen de mémorisation servant à mémoriser une information de pénétration de face commune pour toutes les classes possibles d'intersections de surface avec l'un desdits voxels.

4.  Système selon la revendication 1 ou 2, dans lequel ledit moyen d'identification récursive comprend :

    -   un moyen de mémorisation des identifications de tous les voxels coupant ladite surface à laquelle on s'intéresse, et
    -   un moyen d'utilisation desdites identifications mémorisées pour construire une image bi-dimensionnelle de ladite surface à laquelle on s'intéresse.

5.  Procédé d'affichage de l'image bi-dimensionnelle d'une surface interne dans un corps solide tri-dimensionnel, ledit procédé comprenant les étapes consistant à :

- mémoriser des motifs de signaux tri-dimensionnels représentant la valeur d'au moins une propriété physique associée à un corps tri-dimensionnel en des emplacements de grille régulièrement espacés qui définissent des éléments voxels dans ledit corps, chaque voxel ayant huit valeurs de sommets,
- accéder sélectivement aux huit valeurs de sommets de voxel de ladite propriété physique pour l'un desdits éléments voxels mémorisés,
- mémoriser une information de pénétration de face commune concernant des intersections possibles de voxels avec une surface à laquelle on s'intéresse,
- produire un indice de pénétration de surface pour chaque voxel, ledit indice comprenant une suite binaire qui représente quelles valeurs de sommets de voxel sont à l'intérieur de ladite surface interne et quelles valeurs de sommets de voxel sont à l'extérieur de ladite surface interne,
- accéder à une information de pénétration de face commune associée au voxel correspondant en fonction des indices produits afin d'éviter un pontage entre ladite surface à laquelle on s'intéresse et d'autres surfaces non reliées mais étroitement mélangées qui ont des propriétés physiques similaires,
- identifier de manière récursive les seuls voxels qui ont des faces communes pénétrées par ladite surface interne, et
- afficher une image bi-dimensionnelle de ladite surface interne en n'utilisant que les pixels identifiés.

6. Procédé selon la revendication 5, dans lequel ladite étape de production d'indice comprend l'étape consistant à comparer simultanément toutes lesdites valeurs de sommets de voxel à une unique valeur représentative de ladite surface interne.

7. Procédé selon la revendication 5, dans lequel ladite étape d'identification récursive comprend l'étape de mémorisation d'une information de pénétration de face commune pour toutes les classes possible d'intersections de surfaces avec lesdits voxels.

8. Procédé selon la revendication 5, comprenant en outre les étapes consistant à mémoriser des identifications de tous les voxels coupant ladite surface à laquelle on s'intéresse en fonction des identifications mémorisées.

## FIG. 1

## FIG. 2

# FIG. 3

FIG.4

UNMARKED ADDRESS SELECTOR _41_

3-D BULK MEMORY _42_

ADDRESS MARKER CIRCUIT _43_

VOXEL REGISTER _44_

SURFACE CONSTANT

8-VALUE COMPARE CIRCUIT _45_

_48_

SCAN

ACCESS

VOXEL ADDRESS STORE _40_

VOXEL ADJACENCY TABLE _46_

SEED VOXEL ADDRESS _47_

TO IMAGE PROCESSOR (FIG. 5)

FROM VOXEL ADDRESS STORE (FIG.4)

FIG. 5

ADDRESS SELECTOR _50_

3-D BULK MEMORY _42_

VOXEL REGISTER _52_

NEIGHBOR-HOOD REGISTER _55_

SURFACE CONSTANT

VOXEL INTER-POLATOR _53_

NORMAL CALCULATOR _56_

SCALE FACTORS

VOXEL SUBDIVIDER _54_

NORMAL INTER-POLATOR _57_

DISPLAY SYSTEM _58_

EP 0 373 854 B1

FIG. 6

START — 60

GET SEED VOXEL ADDRESS — 61

ADD TO ADDRESS LIST — 62

ANY UNMARKED ADDRESSES ? — 63 / NO / YES

GET NEXT UNMARKED ADDRESS — 64

MARK THIS ADDRESS — 65

GET ADJACENT VOXEL ADDRESSES — 68

VOXEL ADJACENCY TABLE — 69

VOXEL INTERSECT ? — 66 / NO / YES

GET VOXEL INDEX — 67

CALCULATE DISPLAY POINTS — 70

VIEW ORIENTATION GENERATOR — 71

DISPLAY SURFACE — 72

STOP — 73